# EUROPÄISCHE PATENTSCHRIFT

(11) **EP 3 156 140 B1**
(45) Veröffentlichungstag und Bekanntmachung des Hinweises auf die Patenterteilung: **22.02.2023**
(21) Anmeldenummer: 16183480.9
(22) Anmeldetag: 10.08.2016
(51) Int. Cl.: G01F 13/00, B08B 5/02, B08B 6/00, B08B 9/08, B29B 7/60, B29B 7/72, B29C 48/27, B29C 48/285, B29B 7/78, B29C 31/02, B29C 48/03

(54) **DOSIERVORRICHTUNG UND VERFAHREN ZUM AUFNEHMEN UND AUSGEBEN VON SCHÜTTGUT**
DOSING DEVICE AND METHOD FOR RECEIVING AND DISPENSING OF BULK MATERIAL
DISPOSITIF ET PROCÉDÉ DE DOSAGE DESTINE A RECEVOIR ET DISTRIBUER DES PRODUITS EN VRAC

(30) Priorität: 16.10.2015 DE 202015105482 U
(43) Veröffentlichungstag der Anmeldung: 19.04.2017
(73) Patentinhaber: iNOEX GmbH Innovationen und Ausrüstungen für die Extrusionstechnik, 49324 Melle (DE)
(72) Erfinder: VOß, Mirko, 32351 Westrup (DE)
(74) Vertreter: Bremer, Ulrich

(56) Entgegenhaltungen:
- EP-A1- 0 616 856
- EP-A1- 2 426 468
- EP-A1- 2 711 097
- EP-A1- 2 856 089
- EP-A1- 3 302 922
- DE-A1-102013 100 812
- DE-B3-102011 112 016
- GB-A- 2 137 969
- JP-A- S60 225 668

## Beschreibung

Die Erfindung betrifft eine Dosiervorrichtung zum Aufnehmen und Abgeben von Schüttgut. Insbesondere betrifft die Erfindung eine kontinuierliche gravimetrische Dosiervorrichtung, die im Betrieb kontinuierlich Schüttgut aufnimmt, eine Messung des Schüttgutes ermöglicht und dieses wiederum ausgibt.

Kontinuierliche gravimetrische Dosiervorrichtungen werden in Produktionsprozessen eingesetzt, um Schüttgüter während des Prozesses kontinuierlich zuzuführen und hierbei zu messen. Als Schüttgut kann z. B. ein Pulver, weiterhin auch andere rieselfähige Schüttgüter wie Körner oder Pellets, Späne, Granulate, Flakes, auch z. B. Mehl und dergleichen, eingesetzt werden.

Während eines Produktionsprozesses kann z. B. Schüttgut nur einer Komponente von einem Behälter, oder auch z. B. einer Hauptkomponente und einer oder mehrerer Nebenkomponenten, der Dosiervorrichtung zugeführt werden, wobei der Materialstrom z. B. in der Einheit Masse pro Zeit, d. h. Gramm pro Sekunde, gemessen werden und nachfolgend einer Verarbeitungseinheit, z. B. einem Extruder, zugeführt werden kann.

Kontinuierliche gravimetrische Messungen werden durch einen Wägetrichter ermöglicht, dem das Schüttgut von oben in seine Trichteröffnung zugeführt wird, sich in dem sich konisch nach unten verjüngenden Wägetrichter somit sammelt und nach unten über eine Ausgabeöffnung ausgegeben wird. Der Wägetrichter ist hierbei vorteilhafterweise an einer Waage aufgehängt, die zeitlich genaue Messungen ermöglicht, wobei das Tara bzw. Gewicht der Dosiervorrichtung gegenüber dem Schüttgut relativ klein ist und bei Differenzmessungen entsprechend herausgerechnet wird.

Rieselfähiges Schüttgut, insbesondere Pulver, kann sich jedoch an der Dosiervorrichtung, insbesondere der Trichterwand, festsetzen. Der Wägetrichter bzw. seine konische Trichterwand weist im Allgemeinen eine hinreichende Steigung auf, die größer als der ein Aufstauen des Schüttguts ermöglichende Böschungswinkel des Schüttguts ist. Dennoch kann sich insbesondere Pulver oder feine Körner des Schüttguts, z. B. auch Abrieb gröberen Schüttguts wie z. B. von Pellets, Körnern usw., im Bereich der Dosiervorrichtung, insbesondere der Trichterwand, festsetzen. Hierdurch werden die Messungen entsprechend in ihrer Genauigkeit beeinträchtigt. Weiterhin kann bei einem Materialwechsel Rest-Material an der Dosierungseinrichtung verbleiben, was insbesondere auch z. B. bei farbigen Kunststoff- Materialien zu erheblichen Beeinträchtigungen führt.

Die DE 10 2011 112 016 B3 beschreibt ein Verfahren zum Reinigen von Dosiervorrichtungen, die zum Beschicken von Vorrichtungen mit Schüttgütern dienen, wobei Luft von oben in den Einführtrichter bzw. Zuführtrichter eingeblasen wird. Durch das Einblasen von Luft kann tatsächlich ein Festsetzen des Materials weitgehend vermieden werden. Es zeigt sich jedoch, dass insbesondere bei feinen Pulvern dennoch Material verbleiben kann. Zwar kann während z. B. eines Material-Wechsels ein gründlicher Reinigungsvorgang durch einen hohen Volumenstrom der eingeblasenen Luft erfolgen; während einer gravimetrischen Messung kann ein höherer Volumenstrom jedoch wiederum selbst zu einer Beeinträchtigung der Messung führen, da die eingeblasene Luft auf die Trichterwände bzw. den Einfülltrichter eine Kraft ausübt, die z. B. als Gewichtskraft in die Messung eingeht.

Die DE 10 2013 100 812 A1 beschreibt ein Verfahren für einen Materialwechsel von einem Einsatzmaterial zu einem Folgematerial bei einer Extrusionsvorrichtung. Hierbei wird eine Materialwechsel-Anforderung erkannt, nachfolgend der Materialwechsel vorbereitet und durchgeführt. Ergänzend ist ein Reinigungsschritt vorgesehen, u.a. durch Erzeugen eines zyklonartigen Luftwirbels. Ein derartiger zyklonartiger Luftwirbel kann an den Wänden eines Trichters festsitzende Partikel effektiv erfassen. Außerhalb eines Materialwechsels kann ein zu hoher Volumenstrom jedoch wiederum zu einer Verfälschung des Messergebnisses führen.

Die EP 2 711 097 A1 beschreibt ein Verfahren und eine Vorrichtung zum Entstauben von Schüttgut mittels Ionisierung, wobei ein ionisiertes Gas an ein Granulat herangebracht wird und dadurch die Anhaftung der Staubpartikel am Granulat aufgehoben wird, sodass der Staub abgesaugt werden kann.

Die DE 10 2011 112 016 B3 beschreibt ein Verfahren zum Reinigen einer Dosiervorrichtung, bei dem unter anderem über den Umfang eines Einfülltrichters Druckluftdüsen verteilt sind, damit sich hier kein Fördergut festsetzen kann.

Die EP 2 426 468 A1 beschreibt ein Verfahren zum Bereitstellen von Proben mittels einer Dosiervorrichtung, welche ein Wägesystem aufweist. Hierbei ist ein lonisator vorgesehen, mit dem elektrostatische Ladungen einer Dosiereinheit oder eines Zielgefäßes zumindest reduziert werden können.

Die GB 2 137 969 A beschreibt eine Reinigungsvorrichtung zum Reinigen einer Wägevorrichtung mit einer Düse zum Blasen eines Luftstrahls gegen das Innere eines Trichters in kurzen Luftstößen.

Die WO 2013/182869 A1 zeigt eine Zuführeinheit mit einem Aufnahmetrichter, einer Wiege-Zelle, einer Fördereinrichtung und einem Ausgabeende, wobei der Aufnahmetrichter an ein Auffüll-System anzuschließen ist und das Ausgabeende an einen nachfolgenden Behälter anzuschließen ist. Hierbei bei soll ein kontinuierlicher Prozess des Aufnehmens und Förderns erreicht werden.

Die EP 0 616 856 A1 zeigt ein Verfahren und eine Vorrichtung zum Entfernen feiner Partikel von synthetischen Kunstharz-Pellets. Hierbei wird eine Mischung der synthetischen Kunstharz-Pellets mit den feinen Partikeln mit einem Gas in Kontakt gebracht, das einer Gasionisierungs-Behandlung unterzogen worden ist, um ein eine elektrostatische Adhäsion zwischen den synthetischen Kunstharz-Pellets und den feinen Partikeln zu eliminieren und somit die feinen Partikel von den Pellets zu trennen.

Die nachveröffentlichte WO 2016/198223 A1 beschreibt eine Extrusionsvorrichtung und ein Verfahren für die Herstellung einer Kunststofffolie, die zumindest zwei Vorlagevorrichtungen für die Vorlage von Einsatzmaterial für einen Extruder aufweist, wobei in jeder Vorlagevorrichtung eine automatische Reinigungsvorrichtung angeordnet ist für ein Entfernen von Einsatzmaterial aus der Vorlagevorrichtung bei einem Materialwechsel für die Extrusionsvorrichtung.

Der Erfindung liegt die Aufgabe zugrunde, eine Dosiervorrichtung, insbesondere eine kontinuierliche gravimetrische Dosiervorrichtung zu schaffen, die mit relativ geringem Aufwand eine genaue Dosierung und gute Reinigung ermöglicht. Weiterhin ist ein Verfahren zum kontinuierlichen Zuführen und Ausführen von Schüttgut unter Verwendung einer derartigen Dosiervorrichtung vorgesehen.

Diese Aufgabe wird durch eine Dosiervorrichtung nach Anspruch 1 gelöst. Die Unteransprüche beschreiben bevorzugte Weiterbildungen. Weiterhin ist ein Verfahren nach dem unabhängigen Anspruch vorgesehen, wobei das Verfahren insbesondere zur Verwendung der Dosiervorrichtung vorgesehen ist.

Somit ist eine Einblaseinrichtung vorgesehen, die zumindest in den Einfülltrichter bzw. Wägetrichter ionisierte Luft einbläst. Die Einblaseinrichtung weist mindestens eine Zuführ-Düse mit einer lonisierungseinrichtung auf. Die Zuführ-Düsen können insbesondere von oben in die Trichteröffnung hinein ragen, so dass die ionisierte Luft von oben nach unten eingeblasen wird, z. B. vertikal nach unten oder schräg nach unten und außen auf die TrichterWand.

Weiterhin kann die Einblaseinrichtung auch zum Einblasen ionisierter Luft zur Ausbildung eines Zyklonwirbels innerhalb des Einfülltrichters vorgesehen sein.

Hierbei wird erfindungsgemäß erkannt, dass das Einblasen von ionisierter Luft keinen deutlich größeren Aufwand erfordert als das Einblasen herkömmlicher Luft. So kann an die Zuführdüse anschließend z. B. eine Hochspannungs-Entladungseinrichtung vorgesehen sein, die die ausgeblasene Luft teilweise ionisiert.

Es zeigt sich, dass die ionisierte Luft ein Festsetzen von Partikeln, Pulver oder Abrieb, insbesondere an den Trichterwänden, sowie anderen Teilen der Dosiervorrichtung, effektiv verhindert. Die festsitzenden Partikel wie Pulver und Abrieb setzen sich insbesondere aufgrund elektrostatischer Aufladung, die z. B. durch die gegenseitige Reibung in dem Schüttgut auftritt, an den Trichterwänden und weiteren Komponenten fest. Durch die ionisierte Luft kann auch bei einem geringen Volumenstrom eine effektive Entladung und eine sichere Reinigung erreicht werden.

Hierbei zeigt sich, dass der Volumenstrom gegenüber den herkömmlichen Ausbildungen deutlich verringert werden kann. Somit ist insbesondere auch der Einsatz einer Einblaseinrichtung in einer gravimetrischen Dosiervorrichtung möglich, bei der Material von oben in einen Wägetrichter zugeführt und unten ausgegeben wird und der Wägetrichter mitsamt dem jeweils aufgenommenen Material jeweils aktuell gemessen wird. Der geringe Volumenstrom ionisierter Luft führt zu keiner Verschlechterung der Messung, sondern kann ein Festsetzen von Partikeln effektiv verhindern.

Hierbei kann die Einblaseinrichtung, d. h. Zuführdüsen mit z. B. einer Hochspannungs-Entladeeinrichtung, auch außerhalb der gewogenen Masse vorgesehen sein, so dass das Tara bzw. abzuziehende Gewicht der Wägevorrichtung hierdurch nicht erhöht wird.

Ergänzend zur Reinigung des Einfülltrichters kann auch eine Reinigung einer sich an den Einfülltrichter anschließenden Fördereinrichtung, z. B. einer Förderschnecke in einem Fördergehäuse, vorgesehen sein, die z. B. zum Transport einer Nebenkomponente zu einem Auslass vorgesehen ist. Die Reinigung der Fördereinrichtung kann insbesondere während eines Materialwechsels durchgeführt werden, um im Betrieb den Transport nicht zu beeinflussen.

Die Erfindung wird im Folgenden anhand der beiliegenden Zeichnungen an einer Ausführungsform näher erläutert. Es zeigen:
- Fig. 1: eine kontinuierliche gravimetrische Dosiervorrichtung gemäß einer Ausführungsform der Erfindung, mit Detailvergrößerung einer Zuführdüse.
- Fig. 2: die Dosiervorrichtung für die Hauptkomponente mit vertikalem Auslass in Seitenansicht und Schnitt B-B;
- Fig. 3: die Fördereinrichtung für eine Nebenkomponente in Seitenansicht und Schnitt A-A.

Eine kontinuierliche gravimetrische Dosiervorrichtung 40 dient hier zur Zuführung einer Hauptkomponente 30 und einer oder zweier Nebenkomponenten 31, 32 als jeweils Schüttgut, z. B. Pellets, Körner, Pulver, Späne, Granulate, Flakes, auch z. B. Mehl.

Die Hauptkomponente 30 weist eine Trägerplatte 4 mit einem Gestell 5 auf, an dem für eine Hauptkomponente 30 ein sich nach unten konisch verjüngender Wägetrichter 21, sowie eine Überlastsicherung 25 und ein Aufnahmestück 26 vorgesehen sind.

Bei dieser Ausführungsform werden ergänzend zwei Nebenkomponenten 31, 32, zugeführt, wobei für die hier links gezeigte Nebenkomponente 31 wiederum einen Wägetrichter 20 an einer Trägerplatte 22, und entsprechend für die zweite Nebenkomponente 32 ein Wägetrichter 10 vorgesehen sind.

Die Zuführung der Komponenten 30, 31, 32 in die Wägetrichter 10, 20, 21 erfolgt über eine kontaktlose Zuführeinrichtung, z. B. über flexible Schläuche 7, 24, und Einlaufstutzen, wobei hier z. B. ein Einlaufstutzen 8 der Nebenkomponente 32 gezeigt ist; weiterhin sind z. B. eine Trägerplatte 9, ein Auffangtrichter 11 und Prallkegel 12 vorgesehen.

Die Hauptkomponente 30 wird somit von dem flexiblen Schlauch 24 zugeführt, von dem Wägetrichter 21 aufgenommen und nach unten, z. B. über einen Prallkegel, über eine Ausgabeöffnung 21b ausgegeben zu einem Auslass, der für die Hauptkomponente 30 direkt über das Halsstück 14 und z. B. einen Adapter 15 vertikal nach unten führt. Das ausgegebene Schüttgut kann somit direkt einer Verarbeitungseinheit, z. B. einem Extruder zum Aufschmelzen von Kunststoffgranulat, Kunststoffpellets oder Kunststoffpulver zugeführt werden.

Der Wägetrichter 21 wird mitsamt der jeweils in ihm aufgenommenen Hauptkomponente 30 an seiner Aufhängung gewogen; Material- Zuführung und -Ausgabe erfolgen kontaktlos und beeinflussen die gravimetrische Messung nicht.

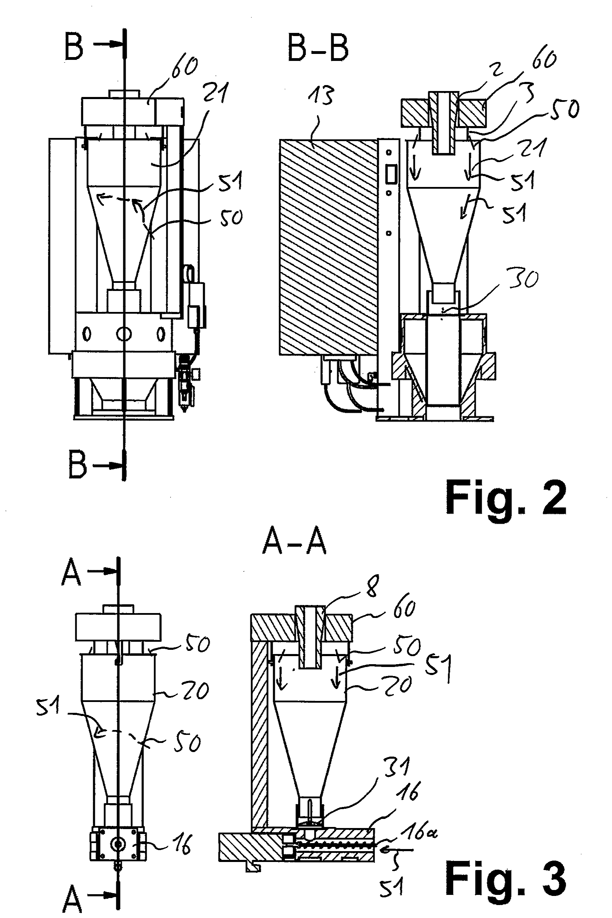

Die Nebenkomponenten 31, 32 werden entsprechend von oben in die Wägetrichter 10 und 20 zugeführt und nachfolgend nach unten ausgegeben. Da die Ausgabe letztlich über das gemeinsame Halsstück 14 erfolgt, werden die Nebenkomponenten 31, 32 nach ihrer Ausgabe aus den Wägetrichtern 10 und 20 über Fördereinrichtungen, z. B. mit Fördergehäuse 16, Dosiermotor 17 und in dem Fördergehäuse 16 angetriebener Förderschnecke, seitlich zu dem Halsstück 14 befördert, wie insbesondere auch aus den Schnitten der Fig. 2 und 3 ersichtlich ist.

Somit können hier jeweils die Hauptkomponente 31 und die Nebenkomponenten 31, 32 kontinuerlich den Wägetrichtern 20, 21, 10 zugeführt werden, so dass sie kontinuierlich, d. h. im Durchlauf, von Wägeeinrichtungen (Waagen) 60 gewogen werden, und von den Wägetrichtern 20, 21, 10 nachfolgend nach unten weitergegeben werden. Über die Wägetrichter 20, 21, 10 und somit die gravimetrische Wägung kann jeweils die Zuführmenge der Komponenten 30, 31, 32 in Masse pro Sekunde, d. h. z. B. Gramm pro Sekunde ermittel werden, z. B. um die Ansteuerung des Extruders einzustellen.

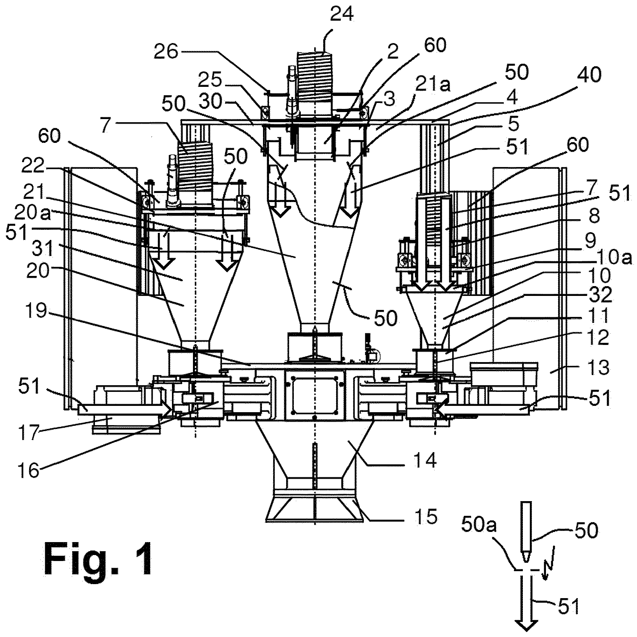

Erfindungsgemäß ist vorgesehen, ionisierte Luft 51 über Zuführ-Düsen 50 an verschiedenen Stellen zuzuführen. Die Zuführ-Düsen 51 weisen eine in der Detail-Darstellung der Fig. 1 angedeutete, in Ausstoßrichtung hinter ihren Düsenöffnungen der Zuführ-Düsen 51 vorgesehene lonisier-Einrichtung 50a auf, z. B. eine Hochspannungs-Ionisierungseinrichtung durch Entladung. somit wird ein Strom ionisierter Luft 51 ausgegeben wird, insbesondere mit einem geringem Volumenfluss.

Die ionisierte Luft 51 wird hierbei gemäß der gezeigten Ausbildung an verschiedenen Stellen und in verschiedene Richtungen in die Wägetrichter 10, 20, 21 eingeblasen, insbesondere vertikal von oben, z. B. jeweils über zwei Zuführ-Düsen 51. Die Zuführ-Düsen 51 können hierbei jeweils in die Wägetrichter 20, 21, 10 z. B. hinein zeigen oder hinein ragen.

Ergänzend kann eine Zyklon-Verwirbelung mit ionisierter Luft 51 erfolgen, d. h. ionisierte Luft 51 in bezüglich der Symmetrieachse der Wägetrichter 10, 20, 21 tangentialer Richtung eingeblasen werden, d.h. z. B. außerhalb der Zeichenebene, zur Ausbildung einer Zyklon-Verwirbelung in Umfangsrichtung, der somit die gesamte konische Wandfläche erfassen kann.

Weiterhin kann ionisierte Luft 50 auch in oder durch die Fördergehäuse 16 der Nebenkomponenten geführt werden. Dies kann insbesondere außerhalb der Förder-Zeiten, z. B. bei einem Material-Wechsel erfolgen, um den Massetransport durch die Förderschnecken 16a nicht zu beeinflussen.

Durch die ionisierte Luft 51 können somit kleine Körner, Pulver oder Abrieb, die an den Wänden, insbesondere der Wägetrichter 10, 20, 21, und der nachfolgenden Teilen festsitzen, entfernt werden.

### Bezugszeichenliste

- 2: Einlassstutzen
- 3: Aufnahmestück
- 4: Trägerplatte Hauptkomponente
- 5: Gestell
- 6: Trennblech
- 7: Flexibler Schlauch der Hauptkomponente
- 8: Einlaufstutzen
- 9: Trägerplatte
- 10: Einfülltrichter, insbesondere Wägetrichter der Nebenkomponente 32
- 11: Auffangtrichter
- 12: Prallkegel
- 13: Steuereinrichtung
- 14: Halsstück
- 15: Adapter
- 16: Fördergehäuse
- 17: Dosiermotor
- 19: Grundplatte
- 20: Einfülltrichter, insbesondere Wägetrichter der Nebenkomponente 31
- 21: Einfülltrichter, insbesondere Wägetrichter der Hauptkomponente 30
- 22: Trägerplatte
- 24: Flexibler Schlauch der Nebenkomponente
- 25: Überlastsicherung
- 26: Aufnahmestück

- 30: Hauptkomponente
- 31, 32: Nebenkomponente
- 40: Dosiervorrichtung
- 50: Einblaseinrichtung, insbesondere Zuführ-Düsen
- 50a: lonisierungseinrichtung
- 51: ionisierte Luft

- 60: Wägeeinrichtung

## Patentansprüche

1. Dosiervorrichtung (40) zum kontinuierlichen Zuführen und Ausgeben von Schüttgut (30, 31, 32),
wobei die Dosiervorrichtung (40) aufweist:
einen Einfülltrichter (10, 20, 21) mit einer an seinem oberen Ende ausgebildeten Trichteröffnung (10a, 20a, 21a) zum Aufnehmen des von oben zugeführtem Schüttgutes (30, 31, 32) und einer unteren Ausgabeöffnung zum Ausgeben des Schüttgutes (30, 31, 32),
eine Wägeeinrichtung (60), die ausgebildet ist, das Schüttgut (30, 31, 32) zu messen,
wobei der Einfülltrichter (10, 20, 30) als Wägetrichter der Wägeeinrichtung (60) ausgebildet ist,
wobei die Dosiervorrichtung (40) als kontinuierliche gravimetrische Dosiervorrichtung (40) ausgebildet ist und der Wägetrichter (10, 20, 21) an der Wägeeinrichtung (60) zum Wiegen des Wägetrichters (10) mitsamt des aufgenommenen Schüttguts (30, 31, 32) aufgehängt ist, und
wobei sie für ein kontinuierliches Aufnehmen und Weitergeben des mindestens einen Schüttguts (30, 31, 32) vorgesehen ist,
**dadurch gekennzeichnet, dass**
die Dosiervorrichtung (40) für ein Weitergeben des mindestens einen Schüttguts (30, 31, 32) zu einem als Verarbeitungseinheit dienenden Extruder für eine Kunststoff-Verarbeitung vorgesehen ist,
die Dosiervorrichtung (40) eine Einblaseinrichtung (50) aufweist, die ausgebildet ist, ionisierte Luft in den Wägetrichter (10, 20, 21) einzublasen zum Reinigen und Verhindern von Ablagerungen,
wobei die Einblaseinrichtung (50) mindestens eine Zufuhr-Düse (50) und eine nachgeordnete lonisierungseinrichtung (50a) zum Ionisieren der Luft aufweist.

2. Dosiervorrichtung (40) nach Anspruch 1, **dadurch gekennzeichnet, dass** die Einblaseinrichtung (50) außerhalb der von der Wägeeinrichtung (60) gewogenen Masse angeordnet ist.

3. Dosiervorrichtung (40) nach Anspruch 1 oder 2, **dadurch gekennzeichnet, dass** die lonisierungseinrichtung (50a) eine Hochspannungs- Entladungseinrichtung zur Hochspannungsentladung und Ionisierung der von der mindestens einen Zuführ-Düse (50) ausgegebenen Luft aufweist.

4. Dosiervorrichtung (40) nach einem der vorherigen Ansprüche,
**dadurch gekennzeichnet, dass** die Einblaseinrichtung (50) mindestens eine, vorzugsweise mehrere, nach unten gerichtete Zuführ-Düsen (50) zum im Wesentlichen vertikalen Einblasen der ionisierten Luft (51) in den Einfülltrichter (10, 20, 21) aufweist.

5. Dosiervorrichtung (40) nach einem der vorherigen Ansprüche,
**dadurch gekennzeichnet, dass** die Einblaseinrichtung (50) mindestens eine Zuführ-Düse (50) zur Ausbildung einer Zyklon-Verwirbelung mit ionisierter Luft (51) entlang der Wand des Einfülltrichters (10, 20, 21) aufweist.

6. Dosiervorrichtung (40) nach einem der vorherigen Ansprüche,
**dadurch gekennzeichnet, dass** am unteren Ende des Einfülltrichter (21) eine Auslassöffnung (21b) zum Auslassen des Schüttguts (30) nach unten zu der Verarbeitungseinheit ausgebildet ist.

7. Dosiervorrichtung (40) nach einem der vorherigen Ansprüche,
**dadurch gekennzeichnet, dass** am unteren Auslass des Einfülltrichters (20, 21) eine Fördereinrichtung (16, 17) zum Fördern des vom Einfülltrichter (10, 20) ausgegebenen Schüttguts (31, 32) in nicht-vertikaler Richtung vorgesehen ist,
wobei die Einblaseinrichtung mindestens eine Zuführ-Düse (50) zum Einblasen ionisierter Luft (51) durch die Fördereinrichtung (16) während eines Materialwechsels aufweist.

8. Dosiervorrichtung (40) nach Anspruch 7, **dadurch gekennzeichnet, dass die** Fördereinrichtung (16, 17) zum Fördern des vom Einfülltrichter (10, 20) ausgegebenen Schüttguts (31, 32) in nicht-vertikaler Richtung zu einer gemeinsamen Aufnahme einer Nebenkomponente (14, 15) mit einer Hauptkomponente (30) vorgesehen ist.

9. Verfahren zum kontinuierlichen Zuführen und Ausgeben von Schüttgut (30, 31, 32) mittels einer Dosiervorrichtung (40), bei dem
- einer Trichteröffnung (10a, 20, 21a), die an einem oberen Ende eines Einfülltrichters (10, 20, 21) der Dosiervorrichtung (40) ausgebildet ist, kontinuierlich Schüttgut (30, 31, 32) zugeführt wird, und
- an einer unteren Ausgabeöffnung das Schüttgut kontinuierlich ausgegeben wird,
wobei das Schüttgut mittels einer einen Wägetrichter (10, 20, 21) aufweisenden Wägeeinrichtung (60) der Dosiervorrichtung (40) kontinuierlich gravimetrisch gemessen wird,
wobei der mindestens eine Einfülltrichter (10, 20, 21) als der Wägetrichter (10, 20, 21) ausgebildet ist und an der Wägeeinrichtung (60) aufgehängt ist und der Wägetrichter (10) mitsamt dem aufgenommenen Schüttgut (30, 31, 32) gewogen wird,
wobei das mindestens eine Schüttgut (30, 31, 32) kontinuierlich aufgenommen und zu einem als Verarbeitungseinheit dienenden Extruder für eine Kunststoff-Verarbeitung weitergegeben wird,
wobei ionisierte Luft (51) durch eine Einblaseinrichtung (50) der Dosiervorrichtung (40) in zumindest den Wägetrichter (10, 20, 21) zum Reinigen und Verhindern von Ablagerungen eingeblasen wird,
wobei die ionisierte Luft (51) an verschiedenen Stellen und/oder in verschiedene Richtungen des Wägetrichters 10, 20, 21 eingeblasen wird,
wobei die ionisierte Luft (51) in bezüglich der Symmetrieachse des Wägetrichters (10, 20, 21) tangentialer Richtung eingeblasen wird zur Ausbildung einer Zyklon-Verwirbelung in Umfangsrichtung.

10. Verfahren nach Anspruch 9, **dadurch gekennzeichnet, dass** die ionisierte Luft (51) in der tangentialen Richtung eingeblasen wird zur Ausbildung der Zyklon-Verwirbelung zum Erfassen einer konischen Wandfläche.

11. Verfahren nach Anspruch 9 oder 10, **dadurch gekennzeichnet, dass** ionisierte Luft (50) weiterhin in oder durch ein Fördergehäuse (16) einer Fördereinrichtung zum Fördern einer Nebenkomponenten geführt wird, insbesondere außerhalb der Förder-Zeiten der Nebenkomponenten.

## Claims

1. Dosing device (40) for continuously receiving and dispensing of bulk material (30, 31, 32),
said dosing device (40) comprising:
a feed hopper (10, 20, 21) having a hopper opening (10a, 20a, 21a) formed at its upper end for receiving the bulk material (30, 31, 32) fed in from above, and a lower outlet opening for dispensing the bulk material (30, 31, 32),
a weighing device (60) designed to measure the bulk material (30, 31, 32),
said feed hopper (10, 20, 30) being designed as weighing hopper of said weighing device (60),
said dosing device (40) being designed as continuous gravimetric dosing device (40) and said weighing hopper (10, 20, 21) being suspended on said weighing device (60) for weighing the feed hopper (10) together with the bulk material (30, 31, 32) contained therein, and the dosing device being provided for continuously receiving and dispensing of the at least one bulk material (30, 31, 32),
**characterised in that**
the dosing device (40) being provided for passing along the at least one bulk material (30, 31, 32) to an extruder serving as a processing unit for processing plastic materials,
the dosing device (40) comprising an injection device (50) designed to blow ionised air into said weighing hopper (10, 20, 21) for cleansing and preventing debris,
said injection device (50) comprising at least one feeding nozzle (50) and a downstream ionisation device (50a) for ionising the air.

2. Dosing device (40) according to claim 1, **characterised in that** said injection device (50) is arranged outside the mass weighed by said weighing device (60).

3. Dosing device (40) according to claim 1 or 2, **characterised in that** said ionisation device (50a) comprises a high voltage discharge device for high voltage discharging and ionising the air discharged from said at least one feeding nozzle (50).

4. Dosing device (40) according to one of the above claims,
**characterised in that** the injection device (50) comprises at least one, preferably a plurality of, downwards directed feeding nozzles (50) for blowing-in the ionised air (51) into said feed hopper (10, 20, 21) in an essentially vertical manner.

5. Dosing device (40) according to one of the above claims,
**characterised in that** the injection device (50) comprises at least one feeding nozzle (50) for creating a cyclone turbulence with ionised air (51) along the wall of the feed hopper (10, 20, 21).

6. Dosing device (40) according to one of the above claims,
**characterised in that** at the bottom end of said feed hopper (21) an outlet opening (21b) is formed for discharging the bulk material (30) downwards towards the processing unit.

7. Dosing device (40) according to one of the above claims,
**characterised in that** at the bottom outlet of the feed hopper (20, 21) a transporting device (16, 17) is provided for conveying the bulk material (30) discharged from said feed hopper (10, 20) in a non-vertical direction,
where said injection device comprises at least one feeding nozzle (50) for blowing-in ionised air (51) through said transporting device (16) during a change of materials.

8. Dosing device (40) according to claim 7, **characterised in that** said transporting device (16, 17) for conveying the bulk material (31, 32) discharged by said feed hopper (10, 20) in a non-vertical direction is designed to jointly receive a secondary component (14, 15) with a main component (30).

9. Method for continuously receiving and dispensing of bulk material (30, 31, 32) by means of a dosing device (40), wherein
- a hopper opening (10a, 20, 21a) which is formed at an upper end of a feed hoppers (10, 20, 21) of the dosing device (40) is continuously fed with bulk material (30, 31, 32), and
- at a lower outlet opening the bulk material is continuously discharged,
wherein the bulk material is continuously gravimetrically measured by means of a weighing device (60) of the dosing device (40) comprising a weighing hopper (10, 20, 21),
wherein said at least one feed hopper (10, 20, 21) is designed as the weighing hopper (10, 20, 21) and suspended from said weighing device (60), and said weighing hopper (10) is weighed together with the bulk material (30, 31, 32) contained therein,
wherein the at least one bulk material (30, 31, 32) is continuously received and passe on towards an extruder serving as a processing unit for processing plastic materials,
wherein ionised air (51) is blown in through an injection device (50) of the dosing device (40) into at least the weighing hopper (10, 20, 21) for cleansing and preventing debris,
wherein the ionised air (51) is blown in at different locations and/or in different directions of the weighing hopper (10, 20, 21),
wherein the ionised air (51) is blown in a tangential direction in relation to the axis of symmetry of the weighing hopper (10, 20, 21) so as to create a cyclone turbulence in the circumferential direction.

10. Method according to claim 9, **characterised in that** the ionised air (51) is blown in the tangential direction so as to create the cyclone turbulence so as to cover a conical wall surface.

11. Method according to claim 9 or 10, **characterised in that** ionised air (50) is further guided into or through a conveyor housing (16) of a transport device for conveying a secondary component, in particular, outside the transport times of the secondary component.

## Revendications

1. Doseur (40) destiné à délivrer et distribuer continuellement des produits en vrac (30, 31, 32),
ledit doseur (40) présentant :
une trémie de remplissage (10, 20, 21) avec une ouverture de trémie (10a, 20a, 21a) formée à son extrémité supérieure pour recevoir le produit en vrac (30, 31, 32) introduit d'en haut et une ouverture inférieure de distribution pour distribuer le produit en vrac (30, 31, 32),
un dispositif de pesage (60) qui est agencé pour mesurer le produit en vrac (30, 31 ; 32),
la trémie de remplissage (10, 20, 30) étant agencée comme trémie de pesée du dispositif de pesage (60),
le doseur (40) étant agencé comme doseur gravimétrique continu (40) et la trémie de pesée (10, 20, 21) étant suspendue au dispositif de pesage (60) pour être pesée avec le produit en vrac reçu (30, 31, 32), et
le doseur étant prévu pour recevoir et transférer continuellement au moins un produit en vrac (30, 31, 32),
**caractérisé en ce que**
le doseur (40) est prévu pour transférer l'au moins un produit en vrac (30, 31, 32) à une extrudeuse servant d'unité de traitement pour une transformation des matières plastiques,
le doseur (40) présente un dispositif de soufflage (50) qui est agencé pour insuffler de l'air ionisé dans la trémie de pesage (10, 20, 21) pour le nettoyage et la prévention de dépôts, le dispositif de soufflage (50) présentant au moins une buse d'alimentation (50) et un dispositif d'ionisation (50a) en aval pour ioniser l'air.

2. Doseur (40) suivant la revendication 1, **caractérisé en ce que** le dispositif de soufflage (50) est disposé à l'extérieur de la masse pesée par le dispositif de pesage (60).

3. Doseur (40) suivant la revendication 1 ou 2, **caractérisé en ce que** le dispositif d'ionisation (50a) présente un moyen de décharge à haute tension pour une décharge à haute tension et ionisation de l'air distribué par l'au moins une buse d'alimentation (50).

4. Doseur (40) suivant une des revendications précédentes, **caractérisé en ce que** le dispositif de soufflage (50) présente au moins une, de préférence, plusieurs buses d'alimentation (50) dirigées vers le bas pour insuffler l'air ionisé (51) sensiblement verticalement dans la trémie de remplissage (10, 20, 21).

5. Doseur (40) suivant une des revendications précédentes, **caractérisé en ce que** le dispositif de soufflage (50) présente au moins une buse d'alimentation (50) pour la formation d'un tourbillonnement cyclonique avec de l'air ionisé (51) le long de la paroi de la trémie de remplissage (10, 20, 21).

6. Doseur (40) suivant une des revendications précédentes, **caractérisé en ce qu'**à l'extrémité inférieure de la trémie de remplissage (21) une ouverture de sortie (21b) est agencée pour le déversement du produit en vrac (30) vers le bas vers l'unité de traitement.

7. Doseur (40) suivant une des revendications précédentes, **caractérisé en ce qu'**un dispositif de convoyage (16, 17) est prévu à la sortie inférieure de la trémie de remplissage (20, 21) pour convoyer le produit en vrac (31, 32) distribué par la trémie de remplissage (10, 20) dans une direction non verticale, ledit dispositif de soufflage présentant au moins une buse d'alimentation (50) pour insuffler de l'air ionisé (51) à travers le dispositif de convoyage (16) au cours d'un changement de matériau.

8. Doseur (40) suivant la revendication 7, **caractérisé en ce que** le dispositif de convoyage (16, 17) destiné à convoyer le produit en vrac (31, 32) distribué par la trémie de remplissage (10, 20) dans une direction non verticale jusqu'à une réception commune d'un constituant mineur (14, 15) avec un constituant principal (30).

9. Procédé consistant à délivrer et distribuer des produits en vrac (30, 31, 32) au moyen d'un doseur (40), procédé au cours duquel
- un produit en vrac (30, 31, 32) est continuellement délivré dans une ouverture de trémie (10a, 20, 21a) qui est aménagée à une extrémité supérieure d'une trémie de remplissage (10, 20, 21) du doseur (40) et
- le produit en vrac est distribué continuellement par une ouverture inférieure de distribution,
le produit en vrac étant continuellement mesuré gravimétriquement au moyen d'un dispositif de pesage (60) du doseur (40) présentant une trémie de pesée (10, 20, 21),
l'au moins une trémie de remplissage (10, 20, 21) étant agencée comme trémie de pesée (10, 20, 21) et suspendue au dispositif de pesage (60) et la trémie de pesée (10) étant pesée avec le produit en vrac (30, 31, 32) reçu, l'au moins un produit en vrac (30, 31, 32) étant reçu continuellement et transféré à une extrudeuse servant d'unité de traitement pour un traitement des matières plastiques,
de l'air ionisé (51) étant insufflé par un dispositif de soufflage (50) du doseur (40) au moins dans la trémie de pesée (10, 20, 21) pour le nettoyage et la prévention de dépôts,
l'air ionisé (51) étant insufflé à des endroits différents et/ou dans des directions différentes de la trémie de pesée (10, 20, 21),
l'air ionise (51) étant insufflé dans une direction tangentielle par rapport à l'axe de symétrie de la trémie de pesée (10, 20, 21) pour la formation d'un tourbillonnement cyclonique dans la direction circonférentielle.

10. Procédé suivant la revendication 9, **caractérisé en ce que** l'air ionisé (51) est insufflé dans la direction tangentielle pour la formation du tourbillonnement cyclonique afin de détecter une surface de paroi conique.

11. Procédé suivant la revendication, 9 ou 10, **caractérisé en ce que** l'air ionisé (50) est toujours guidé dans ou à travers un boîtier de convoyage (16) d'un dispositif de convoyage pour convoyer un constituant mineur, notamment hors des temps de convoyage des constituants mineurs.
